# EUROPÄISCHE PATENTSCHRIFT

(11) **EP 3 806 179 B1**
(45) Veröffentlichungstag und Bekanntmachung des Hinweises auf die Patenterteilung: **20.03.2024**
(21) Anmeldenummer: 19202405.7
(22) Anmeldetag: 10.10.2019
(51) Int. Cl.: H01M 4/66, H01M 10/04, H01M 10/0525, H01M 10/0587, H01M 50/10, H01M 50/124, H01M 50/172, H01M 50/20, H01M 50/528, H01M 50/531

(54) **SEKUNDÄRE LITHIUMBATTERIE UND HERSTELLUNGSVERFAHREN**
SECONDARY LITHIUM BATTERY AND METHOD OF MANUFACTURE
BATTERIE LITHIUM SECONDAIRE ET PROCÉDÉ DE FABRICATION

(43) Veröffentlichungstag der Anmeldung: 14.04.2021
(73) Patentinhaber: VARTA Microbattery GmbH, 73479 Ellwangen Jagst (DE)
(72) Erfinder: Fischer, Claus-Christian, 73479 Ellwangen (DE); Kilibarda, Goran, 73525 Schwäbisch Gmünd (DE); Kreidler, Bernd, 73479 Ellwangen (DE); Schebesta, Sebastian, 73479 Ellwangen (DE)
(74) Vertreter: Ostertag & Partner Patentanwälte mbB

(56) Entgegenhaltungen:
- EP-A1- 2 367 218
- EP-A1- 3 255 714
- CN-U- 202 405 330
- DE-A1-102011 010 241
- DE-A1-102014 217 296
- DE-T5-112013 007 033
- MATTHIAS HERRMANN: "Packaging - Materials review", AIP CONFERENCE PROCEEDINGS, 1. Januar 2014 (2014-01-01), Seiten 121-133, XP055645937, NEW YORK, US ISSN: 0094-243X, DOI: 10.1063/1.4878483

## Beschreibung

Die nachfolgend beschriebene Erfindung betrifft eine sekundäre Lithiumbatterie und ein Verfahren zur Herstellung einer sekundären Lithiumbatterie.

Unter eine "Batterie" verstand man ursprünglich mehrere elektrisch miteinander verschaltete, zur Speicherung elektrischer Energie befähigte und in einem gemeinsamen Gehäuse angeordnete elektrochemische Zellen. Heute werden jedoch auch einzelne elektrochemische Zellen (Einzelzellen) in einem Gehäuse häufig bereits als Batterie bezeichnet. Dies wird auch vorliegend so gehandhabt. Von dem Begriff "Batterie" sind vorliegend also auch eine einzelne, zur Speicherung elektrischer Energie befähigte elektrochemische Zellen in einem Gehäuse umfasst.

Elektrochemische Zellen umfassen stets eine positive Elektrode, eine negative Elektrode und einen Separator, der die positive und die negative Elektrode voneinander trennt. Die Elektroden und der Separator sind meist mit einem Elektrolyten getränkt. In der Regel umschließt ein flüssigkeitsdicht verschlossenes Gehäuse die Elektroden, den Separator und den Elektrolyten.

In zur Speicherung elektrischer Energie befähigten elektrochemischen Zellen findet eine elektrochemische, energieliefernde Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden Ionenstrom innerhalb der Zelle. Dieser Ionenstrom wird durch einen ionenleitenden Elektrolyten gewährleistet.

In sekundären (wieder aufladbaren) Zellen ist diese Entladereaktion reversibel, es besteht also die Möglichkeit, die bei der Entladung erfolgte Umwandlung chemischer Energie in elektrische umzukehren. Werden im Zusammenhang mit sekundären Zellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Ein bekanntes Beispiel für eine wieder aufladbare elektrochemische Zelle ist die sekundäre Lithiumionen-Zelle. Diese umfasst Elektroden, die Lithiumionen reversibel aufnehmen und wieder abgeben können, sowie einen Lithiumionen enthaltenden Elektrolyten.

Lithiumionen-Zellen enthalten ihre Elektroden und Separatoren in aller Regel in Form eines Verbundkörpers. Bei einem solchen Verbundkörper kann es sich um einen Zellenstapel (stack), aus mehreren Einzelzellen handeln. Sehr häufig ist der Verbundkörper aber auch eine Einzelzelle in gewickelter Form (Wickelverbundkörper).

In den Verbundkörpern liegen in der Regel positive und negative Elektroden sowie Separatoren flach aufeinander. Meist sind die Elektroden und Separatoren beispielsweise durch Lamination oder durch Verklebung miteinander verbunden. In der Regel umfassen Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Die Elektroden von Lithiumionen-Zelle umfassen üblicherweise jeweils einen metallischen Stromkollektor sowie elektrochemisch aktive Komponenten (oft auch als Aktivmaterialien bezeichnet) und elektrochemisch inaktive Komponenten.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien oder aus einem Metallschaum oder aus einem metallisierten Vlies.

Als Aktivmaterialien kommen für sekundäre Lithiumionen-Systeme sämtliche Materialien in Frage, die Lithiumionen aufnehmen und wieder abgeben können. Stand der Technik sind diesbezüglich für die negative Elektrode sekundärer Lithiumionen-Systeme insbesondere Materialien auf Kohlenstoffbasis wie graphitischer Kohlenstoff oder zur Interkalation von Lithium befähigte nicht graphitische Kohlenstoffmaterialien. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für die positive Elektrode sekundärer Lithiumionen-Systeme kommen beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel Li-NiₓCo_{y}Al_{z}O₂ (wobei x + y + z typischerweise 1 ist). Auch Mischungen der genannten Materialien können eingesetzt werden.

Als elektrochemisch inaktive Komponenten sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Leitmittel wie Ruß dienen dazu, die elektrische Leitfähigkeit der Elektroden zu erhöhen.

Als Separatoren kommen für Lithiumionen-Zellen insbesondere poröse Kunststofffolien in Frage, beispielsweise aus einem Polyolefin oder aus einem Polyetherketon. Auch Vliese und Gewebe aus diesen Materialien können zum Einsatz kommen.

Als ionenleitenden Elektrolyten können Lithiumionen-Zellen beispielsweise eine Mischung organischer Carbonate, in der ein Lithiumsalz wie Lithiumtetrafluoroborat gelöst ist, enthalten. Bevorzugt sind die Elektroden und Separatoren der Lithiumionen-Zellen mit dem Elektrolyten getränkt.

Knopfzellen mit durch spiralförmiges Aufwickeln von bandförmigen Elektroden und mindestens einem bandförmigen Separator gefertigten Wickelverbundkörpern auf Lithiumionen-Basis sind beispielsweise in der WO 2010/146154 A2 und in der WO 2010/089152 A1 beschrieben. Die beschriebenen Verbundkörper sind in metallischen Gehäusen angeordnet, die meist aus vernickeltem Stahl oder Blech bestehen. Die DE 10 2014 217296 A1 offenbart eine Batterie mit einem Kunststoffgehäuse welches mit einer Al-Legierung als Diffusionsbarriere beschichtet ist.

Die genannten metallischen Gehäusewerkstoffe sind insbesondere zur Fertigung von Knopfzellengehäusen gut geeignet. Knopfzellengehäuse bestehen in der Regel aus becherförmigen Gehäuseteilen, die in Tiefziehprozessen mit Dicken im Bereich von 100 bis 300 µm gefertigt werden. Dies ist mit vernickeltem Stahl oder Blech problemlos möglich. Problematisch ist hierbei allerdings, dass Zellgehäuse aus solchen Materialien anfällig für Korrosion sind, wenn sie in Kontakt mit den Elektroden und dem Elektrolyten einer Lithiumionen-Zelle stehen.

Im Automobilbereich werden für Lithiumionen-Zellen daher häufig Aluminiumgehäuse verwendet, die aufgrund ihrer Passivierungseigenschaften eine ausreichende elektrochemische Stabilität aufweisen. Versuche der Anmelderin, in Analogie hierzu kleinformatige Knopfzellengehäuse durch Umformung sehr dünner Aluminiumbleche zu fertigen, erwiesen sich aufgrund der im Vergleich zu Stahl und Blech geringeren Duktilität von Aluminium als prozesstechnisch sehr herausfordernd. Zudem waren die erhaltenen Gehäuseteile bei den anschließenden Montageprozessen aufgrund ihrer mechanischen Empfindlichkeit (Aluminium ist ein sehr weiches Metall) sehr schwer zu handhaben.

In einem weiteren Ansatz wurde als Ausgangsmaterial zur Fertigung von Knopfzellengehäusen einseitig mit Aluminium beschichtetes Stahlblech verarbeitet. Dieses lieferte bessere Ergebnisse als im Fall der Aluminiumbleche. Allerdings trat bedingt durch die Aluminiumbeschichtung an den verwendeten Tiefziehwerkzeugen ein starker Abrieb auf, der an den Werkzeugen anheftete und für Probleme sorgte.

Der vorliegenden Erfindung lag die Aufgabe zugrunde, eine Lösung für die genannten Probleme zu schaffen.

Zur Lösung dieser Aufgabe schlägt die Erfindung die sekundäre Lithiumbatterie mit den in Anspruch 1 genannten Merkmalen sowie das Verfahren mit den Merkmalen des Anspruchs 8 vor. Weiterbildungen der Erfindung sind Gegenstand von Unteransprüchen.

Die erfindungsgemäße Lithiumbatterie zeichnet sich stets durch die folgenden Merkmale aus:
a. Sie umfasst ein einen Innenraum einschließendes Gehäuse.
b. Sie umfasst einen in dem Innenraum angeordneten Verbundkörper aus mindestens einer positiven Elektrode und mindestens einer negativen Elektrode und mindestens einem Separator.
c. Das Gehäuse umfasst ein metallisches Gehäuseteil mit einer in den Innenraum weisenden Innenseite und vom Innenraum wegweisenden Außenseite.
d. Das metallische Gehäuseteil besteht aus
   - einer ersten Lage aus Aluminium oder aus einer Aluminiumlegierung, welche die Innenseite des metallischen Gehäuseteils bildet, und
   - einer zweiten Lage aus Nickel oder aus einer Nickellegierung, welche die Außenseite des metallischen Gehäuseteils bildet.

Die erfindungsgemäße Batterie zeichnet sich also durch ein Gehäuseteil aus, das unter vollständigem Verzicht auf Edelstahl und Stahlbleche gefertigt wurde. Stattdessen besteht es lediglich aus dem Aluminium oder der Aluminiumlegierung und dem Nickel oder der Nickellegierung.

Überraschenderweise wurde festgestellt, dass die zweite Lage aus dem Nickel oder der Nickellegierung dem metallischen Gehäuseteil eine mechanische Stabilität verleiht, die so a priori nicht zu erwarten war. Bereits Nickellagen von weniger als 1 µm Dicke sorgten für eine signifikante Erhöhung seiner Steifheit, so dass die Ausschussquote in nachfolgenden Montagprozessen beträchtlich reduziert werden konnte. Darüber hinaus traten auch geringere Probleme beim Umformprozess, insbesondere in Verbindung mit dem erwähnten Abrieb, auf.

Die Dicke der Nickelschicht lässt sich gezielt einstellen, was im Folgenden noch beschrieben wird.

Grundsätzlich lassen sich das Nickel oder die Nickellegierung auch durch einen metallischen Werkstoff aus der Gruppe mit Gold, Silber, Chrom, Goldlegierung, Silberlegierung und Chromlegierung ersetzen. Das Nickel und die Nickellegierung sind aber bevorzugt.

Bevorzugt zeichnet sich die Lithiumbatterie durch mindestens eines der unmittelbar folgenden zusätzlichen Merkmale a. und b. aus:
a. Die erste Lage aus dem Aluminium oder aus der Aluminiumlegierung weist eine Dicke im Bereich von 10 µm bis 1500 µm, bevorzugt im Bereich von 50 µm bis 1000 µm, insbesondere im Bereich von 50 µm bis 500 µm, besonders bevorzugt im Bereich von 50 µm bis 150 µm, auf.
b. Die zweite Lage aus dem Nickel oder aus der Nickellegierung weist eine Dicke im Bereich von 0,1 µm bis 100 µm, bevorzugt im Bereich von 0,1 µm bis 50 µm, insbesondere im Bereich von 1 µm bis 10 µm, besonders bevorzugt im Bereich von 3 µm bis 10 µm, auf.

Besonders bevorzugt sind die unmittelbar vorstehenden Merkmale a. und b. in Kombination miteinander realisiert.

Der Verbundkörper der erfindungsgemäßen Lithiumbatterie muss sich nicht von den eingangs erwähnten, aus dem Stand der Technik bekannten Verbundkörpern unterscheiden. Er besteht wie diese aus den Elektroden und dem mindestens einen Separator. Besonders bevorzugt weist er mindestens eines der unmittelbar folgenden Merkmale a. bis c. auf:
a. Der Verbundkörper umfasst die Elektroden in gestapelter Form oder in gewickelter Form.
b. Die Elektroden sind dazu ausgebildet, Lithiumionen reversibel ein- und auslagern zu können.
c. Die Elektroden umfassen jeweils einen Stromkollektor, der teilweise mit einem Aktivmaterial bedeckt ist.

Besonders bevorzugt sind die unmittelbar vorstehenden Merkmale a. bis c. in Kombination miteinander realisiert.

Im Falle eines Wickelverbundkörpers kann der Verbundkörper eine zylindrische oder hohlzylindrische Geometrie wie etwa die in den Figuren 3a und 3b der WO 2010/146154 A2 dargestellten Wickelverbundkörper aufweisen. Der Wickel ist dann aus bandförmigen Elektroden und mindestens einem bandförmigen Separator gefertigt.

Bevorzugt ist der Wickelverbundkörper mit einem für Lithiumionen-Zellen üblichen Elektrolyten getränkt.

Bei den Stromkollektoren der Elektroden handelt es sich bevorzugt um eine Folie, ein Netz, ein Gitter, einen Schaum, ein Vlies oder ein sonstiges textiles Gebilde aus einem Metall oder einer Metalllegierung. Anodenseitig bestehen die Stromkollektoren bevorzugt aus Kupfer oder einer Kupferlegierung, kathodenseitig aus Aluminium oder einer Aluminiumlegierung.

Besonders bevorzugt zeichnet sich die erfindungsgemäße Lithiumbatterie durch das unmittelbar folgende Merkmal d. aus:
d. Die positive Elektrode ist elektrisch mit dem metallischen Gehäuseteil verbunden.

Die Stromkollektoren weisen bevorzugt mindestens einen Abschnitt auf, der nicht mit einem Aktivmaterial bedeckt ist. Dieser Abschnitt kann in bevorzugten Ausführungsformen unmittelbar als Stromleiter dienen, der die positive Elektrode elektrisch mit dem metallischen Gehäuseteil verbindet. Alternativ kann der Stromleiter auch ein separater Leiter sein, der beispielsweise an den nicht mit dem Aktivmaterial bedeckten Abschnitt des Stromkollektors geschweißt ist. Im letzteren Fall handelt es sich bei dem Stromleiter bevorzugt um eine Metallfolie, insbesondere um eine Aluminiumfolie.

Bevorzugt ist der Stromleiter an die Innenseite des metallischen Gehäuseteils geschweißt, also mit der ersten Lage aus dem Aluminium oder aus der Aluminiumlegierung verschweißt. Dies ist besonders dann vorteilhaft, wenn der Stromleiter selbst aus dem gleichen Material wie die erste Lage besteht. Bekanntlich lässt sich beispielsweise Aluminium besonders gut mit Aluminium verschweißen.

Wie eingangs bereits klargestellt, kann es sich bei der erfindungsgemäßen Lithiumbatterie sowohl um eine einzelne in einem Gehäuse angeordnete elektrochemische Zelle als auch um eine Mehrzahl elektrisch miteinander verschalteter Zellen in einem gemeinsamen Gehäuse handeln. Es gibt fünf besonders bevorzugte Varianten der erfindungsgemäßen Lithiumbatterie:

### Variante 1

Hierbei zeichnet sich die erfindungsgemäße Lithiumbatterie durch mindestens eines der unmittelbar folgenden Merkmale a. bis d. aus:
a. Das Gehäuse umfasst das metallische Gehäuseteil als erstes Gehäuseteil sowie ein weiteres metallisches Gehäuseteil als zweites Gehäuseteil.
b. Das erste und das zweite Gehäuseteil sind beide becherförmig ausgebildet und weisen jeweils einen kreisförmigen oder ovalen Boden und eine ringförmige Seitenwand auf.
c. Das erste und das zweite Gehäuseteil sind durch eine ringförmige Dichtung mit elektrisch isolierenden Eigenschaften elektrisch voneinander getrennt.
d. Das erste Gehäuseteil ist mit der positiven Elektrode elektrisch verbunden und das zweite Gehäuseteil ist mit der negativen Elektrode elektrisch verbunden.

Besonders bevorzugt sind die unmittelbar vorstehenden Merkmale a. bis d. in Kombination miteinander realisiert.

In dieser Variante handelt es sich bei der erfindungsgemäße Lithiumbatterie bevorzugt um eine Knopfzelle, bevorzugt mit einem Durchmesser im Bereich von 5 mm bis 25 mm. Die Höhe der Lithiumbatterie überschreitet bei einer Knopfzellenform nicht ihren Durchmesser.

In einer Weiterbildung ist es sowohl im Fall des ersten Gehäuseteils als auch im Fall des zweiten Gehäuseteils bevorzugt, dass der Boden und die ringförmige Seitenwand durch einen Übergangsbereich miteinander verbunden sind. Die Übergangsbereiche umfassen bevorzugt die Bereiche der Gehäuseteile, die außerhalb der Ebene des jeweiligen Bodens liegen, jedoch noch nicht Teil der dazugehörigen Seitenwand sind. Die Übergangsbereiche können abgerundet ausgebildet sein, beispielsweise schulterförmig, oder auch die Form einer scharfen Kante haben.

Die Übergangsbereiche begrenzen die Seitenwände jeweils zu den Böden hin. Zur anderen Seite hin werden die Seitenwände in beiden Fällen bevorzugt durch eine umlaufende freie Kante begrenzt, die eine kreisförmige oder ovale Öffnung definiert.

Die ringförmigen Seitenwände der Gehäuseteile weisen in bevorzugten Ausführungsformen eine zylindrische Geometrie auf. Besonders bevorzugt können die Seitenwände mit den Böden jeweils einen Winkel von 90° einschließen.

Das erste Gehäuseteil weist bei Variante 1 bevorzugt eine Gesamtdicke (addierte Dicken der ersten und der zweiten Lage) im Bereich von 50 µm bis 200 µm, besonders bevorzugt im Bereich von 50 µm bis 150 µm, auf. Die zweite Lage aus dem Nickel oder aus der Nickellegierung weist bei Variante 1 bevorzugt eine Dicke im Bereich von 1 µm bis 10 µm, besonders bevorzugt im Bereich von 3 µm bis 10 µm, auf.

Die Dicke des zweiten Gehäuseteils bewegt sich bevorzugt ebenfalls im Bereich von 50 µm bis 200 µm. Das zweite Gehäuseteil kann wie bei klassischen Knopfzellen beispielsweise aus vernickeltem Stahlblech bestehen.

Bei der Montage des Gehäuses wird das erste Gehäuseteil bevorzugt mit der freien Kante seiner Seitenwand voran in das zweite Gehäuseteil eingeschoben, so dass die ringförmige Seitenwand des ersten Gehäuseteils und die ringförmige Seitenwand des zweiten Gehäuseteils mindestens bereichsweise überlappen und einen umlaufenden, doppelwandigen Mantel bilden und die Böden des ersten und des zweiten Gehäuseteils parallel zueinander ausgerichtet sind. Alternativ kann auch das zweite Gehäuseteil mit der freien Kante seiner Seitenwand voran in das erste Gehäuseteil eingeschoben werden, so dass die ringförmige Seitenwand des ersten Gehäuseteils und die ringförmige Seitenwand des zweiten Gehäuseteils mindestens bereichsweise überlappen und einen umlaufenden, doppelwandigen Mantel bilden und die Böden des ersten und des zweiten Gehäuseteils parallel zueinander ausgerichtet sind.

Die Dimensionen des ersten und des zweiten Gehäuseteils müssen entsprechend aneinander angepasst werden. Das Gehäuseteil, das in das andere eingeschoben werden soll, weist gewöhnlich eine ringförmige Seitenwand mit einem kleineren Durchmesser als die Seitenwand des anderen Gehäuseteils auf. Erfindungsgemäß bevorzugt ist bei Variante 1 der erfindungsgemäßen Lithiumbatterie das erste Gehäuseteil das mit der ringförmigen Seitenwand mit dem kleineren Durchmesser.

Auf die Seitenwand mit dem kleineren Durchmesser wird meist auch die ringförmige Dichtung aufgeschoben bevor die Gehäuseteile zusammengefügt werden. Weiterhin wird der Verbundkörper meist in dem Gehäuseteil mit dem kleineren Mantel positioniert, bevor die Gehäuseteile zusammengefügt werden.

Die ringförmige Dichtung besteht bevorzugt aus einem Kunststoff mit elektrisch isolierenden Eigenschaften, beispielsweise aus Polypropylen (PP) oder einem Polyetheretherketon (PEEK). Sie hat zum einen die Aufgabe, die Gehäuseteile elektrisch gegeneinander zu isolieren. Darüber hinaus soll die Dichtung einen flüssigkeitsdichten Verschluss des Gehäuses gewährleisten.

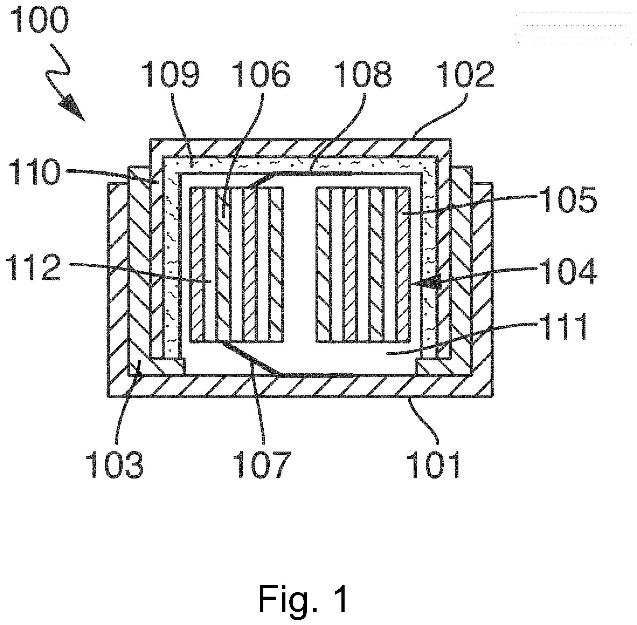

Zum Verschluss des Gehäuses kann in einigen Ausführungsformen die freie umlaufende Kante des größeren Gehäuseteils nach innen umgebogen werden (Verschluss durch Bördelung). Grundsätzlich ist aber auch ein bördelfreier Verschluss möglich, wie das etwa in Figur 1 der WO 2010/146154 A2 dargestellt ist.

Die Bildung der elektrischen Verbindungen zwischen dem ersten Gehäuseteil und der positiven Elektrode sowie dem zweiten Gehäuseteil und der negativen Elektrode kann grundsätzlich vor oder nach dem Zusammenfügen erfolgen. Im letzteren Fall kann beispielsweise eine Widerstands- oder Laserschweißung durch die Wand des Gehäuses hindurch erfolgen.

Wie oben erläutert, wird die positive Elektrode über einen Stromleiter bevorzugt an die Innenseite des ersten Gehäuseteils geschweißt. Die negative Elektrode wird bevorzugt an eine in den Innenraum weisende Innenseite des zweiten Gehäuseteils geschweißt.

### Variante 2

Hierbei zeichnet sich die erfindungsgemäße Lithiumbatterie durch mindestens eines der unmittelbar folgenden Merkmale a. bis d. aus:
a. Das Gehäuse umfasst das metallische Gehäuseteil als erstes Gehäuseteil sowie ein weiteres metallisches Gehäuseteil als zweites Gehäuseteil.
b. Das erste Gehäuseteil ist becherförmig ausgebildet und weist einen kreisförmigen Boden und eine ringförmige Seitenwand auf während das zweite Gehäuseteil als kreisrunde Scheibe ausgebildet ist.
c. Das erste und das zweite Gehäuseteil sind durch eine ringförmige Dichtung mit elektrisch isolierenden Eigenschaften elektrisch voneinander getrennt.
d. Das erste Gehäuseteil ist mit der positiven Elektrode elektrisch verbunden und das zweite Gehäuseteil ist mit der negativen Elektrode elektrisch verbunden.

Besonders bevorzugt sind die unmittelbar vorstehenden Merkmale a. bis d. in Kombination miteinander realisiert.

In dieser Variante handelt es sich bei der erfindungsgemäßen Lithiumbatterie bevorzugt um eine zylindrische Rundzelle, bevorzugt mit einem Durchmesser im Bereich von 5 mm bis 25 mm. Die Höhe der Lithiumbatterie überschreitet ihren Durchmesser bevorzugt um den Faktor 1,1 bis 10, insbesondere um den Faktor 1,5 bis 5.

In einer Weiterbildung sind der Boden und die ringförmige Seitenwand des ersten Gehäuseteils durch einen Übergangsbereich miteinander verbunden. Dieser umfasst bevorzugt den Bereich des ersten Gehäuseteils, der außerhalb der Ebene des Bodens liegt, jedoch noch nicht Teil der Seitenwand ist. Der Übergangsbereich kann abgerundet ausgebildet sein, beispielsweise schulterförmig, oder auch die Form einer scharfen Kante haben.

Der Übergangsbereich begrenzt die Seitenwand des ersten Gehäuseteils zu seinem Boden hin. Zur anderen Seite hin wird die Seitenwand bevorzugt durch eine umlaufende freie Kante begrenzt, die eine kreisförmige Öffnung definiert.

Die ringförmige Seitenwand des ersten Gehäuseteils weist in bevorzugten Ausführungsformen eine zylindrische Geometrie auf. Besonders bevorzugt schließt die Seitenwand mit dem Boden einen Winkel von 90° ein.

Das erste Gehäuseteil weist bei Variante 2 bevorzugt eine Gesamtdicke (addierte Dicken der ersten und der zweiten Lage) im Bereich von 50 µm bis 200 µm, besonders bevorzugt im Bereich von 50 µm bis 150 µm, auf. Die zweite Lage aus dem Nickel oder aus der Nickellegierung weist bei Variante 2 bevorzugt eine Dicke im Bereich von 1 µm bis 10 µm, besonders bevorzugt im Bereich von 3 µm bis 10 µm, auf.

Die Dicke des zweiten Gehäuseteils bewegt sich bevorzugt im Bereich von 50 µm bis 300 µm. Das zweite Gehäuseteil kann beispielsweise aus vernickeltem Stahlblech bestehen.

Bei der Montage des Gehäuses wird die durch die freie Kante der Seitenwand des ersten Gehäuseteils definierte kreisförmige Öffnung durch das zweite Gehäuseteil verschlossen. Auf den Rand des scheibenförmigen zweiten Gehäuseteils wird bevorzugt zuvor die ringförmige Dichtung aufgebracht. Gegebenenfalls können das zweite Gehäuseteil und die Dichtung als vormontierte Baugruppe verarbeitet werden. Der Verschluss des Gehäuses kann z.B. über einen Bördelprozess erfolgen.

Die Bildung der elektrischen Verbindungen zwischen dem ersten Gehäuseteil und der positiven Elektrode sowie dem zweiten Gehäuseteil und der negativen Elektrode kann analog zu den bei Variante 1 beschriebenen Vorgehensweisen erfolgen.

### Variante 3

Hierbei zeichnet sich die erfindungsgemäße Lithiumbatterie durch mindestens eines der unmittelbar folgenden Merkmale a. bis d. aus:
a. Das Gehäuse umfasst das metallische Gehäuseteil als erstes Gehäuseteil sowie ein weiteres metallisches Gehäuseteil als zweites Gehäuseteil.
b. Das erste Gehäuseteil ist becherförmig ausgebildet und weist einen kreisförmigen Boden und eine ringförmige Seitenwand auf während das zweite Gehäuseteil als kreisrunde Scheibe ausgebildet ist.
c. Das erste und das zweite Gehäuseteil sind durch eine ringförmige Dichtung mit elektrisch isolierenden Eigenschaften elektrisch voneinander getrennt.
d. Das erste Gehäuseteil ist mit der negativen Elektrode elektrisch verbunden und das zweite Gehäuseteil ist mit der positiven Elektrode elektrisch verbunden.

Besonders bevorzugt sind die unmittelbar vorstehenden Merkmale a. bis d. in Kombination miteinander realisiert.

Die Lithiumbatterie gemäß dieser Variante unterscheidet sich von der Lithiumbatterie gemäß Variante 2 nur darin, dass die Gehäusepolarität umgekehrt ist.

### Variante 4

Hierbei zeichnet sich die erfindungsgemäße Lithiumbatterie durch mindestens eines der unmittelbar folgenden Merkmale a. bis c. aus:
a. Das Gehäuse umfasst das metallische Gehäuseteil als erstes Gehäuseteil sowie ein weiteres nichtmetallisches Gehäuseteil als zweites Gehäuseteil.
b. Das metallische Gehäuseteil ist als prismatischer Behälter ausgebildet, das einen polygonalen Boden mit n Seiten sowie n rechteckigen Seitenwänden, die mit dem Boden einen rechten Winkel einschließen, aufweist, wobei n eine ganze Zahl von 4 bis 8 ist.
c. Das zweite Gehäuseteil dient als Deckel für das erste Gehäuseteil und verschließt eine von den n rechteckigen Seitenwänden definierte Öffnung.

Besonders bevorzugt sind die unmittelbar vorstehenden Merkmale a. bis c. in Kombination miteinander realisiert.

In dieser Variante handelt es sich bei der erfindungsgemäßen Lithiumbatterie bevorzugt um eine prismatische Miniaturzelle, wie sie in der WO 2019/096856 A1 beschrieben ist. In dieser Ausführungsform kann das erste Gehäuseteil mit der positiven Elektrode verbunden sein während die negative Elektrode mit einem elektrischen Leiter verbunden ist, der durch das zweite Gehäuseteil aus dem Gehäuse herausgeführt ist. Alternativ können auch sowohl die positive als auch die negative Elektrode mit elektrischen Leitern verbunden sein, die durch das zweite Gehäuseteil aus dem Gehäuse herausgeführt sind.

Das zweite Gehäuseteil besteht bevorzugt aus einem elektrisch isolierenden Kunststoff, insbesondere um ein thermoplastisches Elastomer.

Die Miniaturzelle ist bevorzugt quaderförmig ausgebildet und weist bevorzugt eine Breite im Bereich von 20 mm bis 100 mm, eine Länge im Bereich von 10 mm bis 100 mm und eine Höhe im Bereich von 1,5 mm bis 5 mm auf. Ihre Nennkapazität gemäß IEC/EN 61960 liegt bevorzugt im Bereich von 100 mAh bis 1000 mAh.

Das erste Gehäuseteil weist bei Variante 4 bevorzugt eine Gesamtdicke (addierte Dicken der ersten und der zweiten Lage) im Bereich von 50 µm bis 200 µm, besonders bevorzugt im Bereich von 50 µm bis 150 µm, auf. Die zweite Lage aus dem Nickel oder aus der Nickellegierung weist bei Variante 4 bevorzugt eine Dicke im Bereich von 1 µm bis 10 µm, besonders bevorzugt im Bereich von 3 µm bis 10 µm, auf.

### Variante 5

Hierbei zeichnet sich die erfindungsgemäße Lithiumbatterie durch mindestens eines der unmittelbar folgenden Merkmale a. bis c. aus:
a. Das Gehäuse umfasst das metallische Gehäuseteil als erstes Gehäuseteil sowie ein weiteres metallisches Gehäuseteil als zweites Gehäuseteil.
b. Das metallische Gehäuseteil ist als prismatischer Behälter ausgebildet, das einen polygonalen Boden mit n Seiten sowie n rechteckigen Seitenwänden, die mit dem Boden einen rechten Winkel einschließen, aufweist, wobei n eine ganze Zahl von 4 bis 8 ist.
c. Das zweite Gehäuseteil dient als Deckel für das erste Gehäuseteil und verschließt eine von den n rechteckigen Seitenwänden definierte Öffnung.

Besonders bevorzugt sind die unmittelbar vorstehenden Merkmale a. bis c. in Kombination miteinander realisiert.

In dieser Variante handelt es sich bei der erfindungsgemäßen Lithiumbatterie bevorzugt um eine Batterie für ein Kraftfahrzeug. In dieser Ausführungsform kann das erste Gehäuseteil mit der positiven Elektrode verbunden sein während die negative Elektrode mit einem elektrischen Leiter verbunden ist, der durch eine Poldurchführung im zweiten Gehäuseteil oder im ersten Gehäuseteil aus dem Gehäuse herausgeführt ist. Alternativ können auch sowohl die positive als auch die negative Elektrode mit elektrischen Leitern verbunden sein, die durch Poldurchführungen im ersten und/oder im zweiten Gehäuseteil aus dem Gehäuse herausgeführt sind.

Das zweite Gehäuseteil weist bevorzugt den gleichen mehrlagigen Aufbau mit der Lage aus Aluminium oder aus einer Aluminiumlegierung und der Lage aus Nickel oder aus einer Nickellegierung auf wie das erste Gehäuseteil.

In einer besonders bevorzugten Ausführungsform zeichnet sich die erfindungsgemäße Lithiumbatterie durch mindestens eines der unmittelbar folgenden zusätzlichen Merkmale a. bis d. aus:
a. Die erste Lage umfasst neben dem Aluminium oder der Aluminiumlegierung noch Lithium.
b. Die erste Lage ist mit einer Schicht aus Lithium beschichtet.
c. Die erste Lage ist mit Lithium dotiert.
d. Das Aluminium in der ersten Lage ist mit Lithium legiert.

Besonders bevorzugt sind die unmittelbar vorstehenden Merkmale a. und b., a. und c. und a. und d. in Kombination miteinander realisiert.

Bei sekundären Lithiumionen-Zellen kommt es bereits beim ersten Lade-Entlade-Zyklus (der sogenannten Formierung) zur Ausbildung einer Deckschicht auf der Oberfläche der elektrochemisch aktiven Materialien in der Anode. Diese Deckschicht wird als "Solid Elektrolyte Interphase" (SEI) bezeichnet und besteht in der Regel vor allem aus Elektrolytzersetzungsprodukten sowie einer gewissen Menge an Lithium. Dieses Lithium ist in der SEI fest gebunden. Damit verringert sich der Anteil an Lithium, das noch für Ein- und Auslagerungsvorgänge bzw. für Lade- und Entladereaktionen zur Verfügung steht, was zu Kapazitäts- und Leistungsabnahmen führen kann. Der Verlust an Lithium bei der Formierung aber auch in Folgezyklen sollte daher idealerweise kompensiert werden. Erfindungsgemäß wird diese Kompensation mittels des von der ersten Lage umfassten Lithiums bewirkt. Das Lithium kann sehr einfach in oder auf die Lage gebracht werden, nämlich beispielsweise durch Sputtern oder durch einen CVD-Prozess. Erst einmal in das Gehäuse eingebracht, kann es eine Depotwirkung entfalten und Verluste beim Laden und Entladen ausgleichen.

Bevorzugt liegt der von der ersten Lage umfasste Gewichtsanteil an Lithium bei < 1 Gew-%.

Bevorzugt besteht die erste Lage aus Aluminium mit einer Reinheit von mehr als 95 Gew.-%, insbesondere von mehr als 99 Gew.-%. Wenn es sich bei der ersten Lage um eine Aluminiumlegierung handelt, kann die erste Lage Legierungspartner wie z.B. Fe, Mn, Mg, Si und/oder Cu aufweisen, insbesondere in einem Anteil von 0,1 bis 5 Gew.-% aufweisen.

Bevorzugt besteht die zweite Lage aus Nickel mit einer Reinheit von mehr als 95 Gew.-%, insbesondere von mehr als 99 Gew.-%. Wenn es sich bei der zweiten Lage um eine Nickellegierung handelt, kann die zweite Lage Legierungspartner wie z.B. Al, Ti, Fe, Mo, Cr, und/oder Co aufweisen, insbesondere in einem Anteil von bis zu 20 Gew.-%.

Das erfindungsgemäße Verfahren dient zur Herstellung einer sekundären Lithiumbatterie mit den oben beschriebenen Merkmalen und zeichnet sich stets durch die unmittelbar folgenden Schritte a. bis d. aus:
a. Bereitstellung einer Folie oder eines Blechs aus Aluminium oder aus einer Aluminiumlegierung.
b. Aufbringen einer Lage aus Nickel oder aus einer Nickellegierung auf eine Seite der Folie oder des Blechs.
c. Umformen des oder der aus Schritt b. resultierenden Folie oder Blechs mit Hilfe eines Tiefziehwerkzeugs zu einem metallischen Gehäuseteil, dessen Innenseite von der Folie oder dem Blech aus dem Aluminium oder aus der Aluminiumlegierung und dessen Außenseite von der Lage aus dem Nickel oder der Nickellegierung gebildet wird.
d. Montage der Lithiumbatterie unter Verwendung des in Schritt c. gebildeten Gehäuseteils.

Das Aufbringen der Lage aus dem Nickel oder der Nickellegierung kann auf unterschiedliche Arten erfolgen.

In einer ersten bevorzugten Ausführungsform umfasst das Verfahren hierzu den folgenden zusätzlichen Schritt:
a. Die Lage aus dem Nickel oder der Nickellegierung wird durch ein CVD- oder ein PVD-Verfahren auf die Folie oder auf das Blech aus dem Aluminium oder der Aluminiumlegierung aufgebracht.

In einer zweiten bevorzugten Ausführungsform umfasst das Verfahren hierzu den folgenden zusätzlichen Schritt:
a. Als Lage aus dem Nickel oder der Nickellegierung wird eine Folie aus Nickel oder aus der Nickellegierung auf die Folie oder auf das Blech aus dem Aluminium oder der Aluminiumlegierung aufgewalzt.

Gemäß der ersten bevorzugten Ausführungsform lassen sich Schichtdicken von bis zu 10 µm variabel einstellen. Für höhere Schichtdicken kommt bevorzugt die zweite bevorzugte Ausführungsform zum Einsatz.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugter Ausführungsform der Erfindung sowie anhand der Zeichnung. Hierbei zeigt schematisch und nicht maßstabsgetreu
- Figur 1 eine Ausführungsform einer erfindungsgemäßen Lithiumbatterie gemäß obiger Variante 1 in einer Querschnittsansicht.

Die in Fig. 1 dargestellte sekundäre Lithiumbatterie 100 weist ein Gehäuse auf, das aus dem ersten Gehäuseteil 102 und dem zweiten Gehäuseteil 101 zusammengesetzt ist. Die beiden Gehäuseteile 102 und 101 bestehen aus metallischen Materialien. Das Gehäuseteil 101 besteht aus Edelstahl. Das Gehäuseteil 102 besteht aus einer Lage 109 aus Aluminium und einer Lage 110 aus Nickel. Die Lage 109 weist eine Dicke im Bereich von 120 bis 150 µm auf. Die Lage 110 weist eine Dicke von ca. 5 µm auf. Die Gehäuseteile 101 und 102 sind beide becherförmig ausgebildet und umfassen jeweils einen kreisförmigen Boden und eine ringförmige Seitenwand.

Zwischen den Gehäuseteilen 102 und 101 ist die Dichtung 103 angeordnet, die das Gehäuse abdichtet. Das Gehäuse schließt einen Innenraum 111 ein, in dem der Verbundkörper 104 angeordnet ist. Dieser ist aus der positiven Elektrode 105, der negativen Elektrode 106 und dem Separator 112 gefertigt und liegt als Wickel vor. Die Stirnseiten des Wickels weisen in Richtung der Böden der Gehäuseteile 101 und 102.

Die Elektroden 105 und 106 umfassen jeweils einen Stromkollektor, der überwiegend mit einem Aktivmaterial bedeckt und daher auch in weiten Teilen nicht sichtbar ist, abgesehen von den nicht mit Aktivmaterial bedeckten Teilbereichen 107 und 108. Diese Teilbereiche 107 und 108 fungieren vorliegend als Stromleiter. Der Stromleiter 108 verbindet die positive Elektrode 105 mit dem becherförmigen ersten Gehäuseteil 102. Über den Stromleiter 107 ist die negative Elektrode 106 mit dem zweiten Gehäuseteil 101 verbunden. Der Kollektor für die negative Elektrode 106 und damit der Stromleiter 107 ist eine Kupferfolie. Der Kollektor für die positive Elektrode 105 und damit der Stromleiter 108 ist eine Aluminiumfolie.

Der Stromleiter 108 ist mit der aus der Lage 109 gebildeten Innenseite des becherförmigen Gehäuseteils 102 durch Verschweißung verbunden. Der Stromleiter 107 ist mit der Innenseite des Bodens des Gehäuseteils 101 verbunden, ebenfalls durch Verschweißung.

## Patentansprüche

1. Sekundäre Lithiumbatterie (100) mit den folgenden Merkmalen:
a. Die Batterie umfasst ein einen Innenraum (111) einschließendes Gehäuse.
b. Die Batterie umfasst einen in dem Innenraum (111) angeordneten Verbundkörper (104) aus mindestens einer positiven Elektrode (105) und mindestens einer negativen Elektrode (106) und mindestens einem Separator (112).
c. Das Gehäuse umfasst ein metallisches Gehäuseteil (102) mit einer in den Innenraum (111) weisenden Innenseite und vom Innenraum (111) wegweisenden Außenseite.
d. Das metallische Gehäuseteil (102) besteht aus
• einer ersten Lage (109) aus Aluminium oder aus einer Aluminiumlegierung, welche die Innenseite des metallischen Gehäuseteils (102) bildet, und
• einer zweiten Lage (110) aus Nickel oder aus einer Nickellegierung, welche die Außenseite des metallischen Gehäuseteils (102) bildet.

2. Lithiumbatterie nach Anspruch 1 mit den folgenden zusätzlichen Merkmalen:
a. Die erste Lage (109) aus dem Aluminium oder aus der Aluminiumlegierung weist eine Dicke im Bereich von 10 µm bis 1500 µm auf.
b. Die zweite Lage (110) aus dem Nickel oder aus der Nickellegierung weist eine Dicke im Bereich von 0,1 µm bis 100 µm auf.

3. Lithiumbatterie nach Anspruch 1 oder nach Anspruch 2 mit den folgenden zusätzlichen Merkmalen:
a. Der Verbundkörper (104) umfasst die Elektroden (105, 106) in gestapelter Form oder in gewickelter Form.
b. Die Elektroden (105, 106) sind dazu ausgebildet, Lithiumionen reversibel ein- und auslagern zu können.
c. Die Elektroden (105, 106) umfassen jeweils einen Stromkollektor, der teilweise mit einem Aktivmaterial bedeckt ist.
d. Die positive Elektrode (105) ist elektrisch mit dem metallischen Gehäuseteil (102) verbunden.

4. Lithiumbatterie nach einem der Ansprüche 1 bis 3 mit den folgenden zusätzlichen Merkmalen:
a. Das Gehäuse umfasst das metallische Gehäuseteil (102) als erstes Gehäuseteil sowie ein weiteres metallisches Gehäuseteil (101) als zweites Gehäuseteil.
b. Das erste und das zweite Gehäuseteil (102, 101) sind beide becherförmig ausgebildet und weisen jeweils einen kreisförmigen oder ovalen Boden und eine ringförmige Seitenwand auf.
c. Das erste und das zweite Gehäuseteil (102, 101) sind durch eine ringförmige Dichtung (103) mit elektrisch isolierenden Eigenschaften elektrisch voneinander getrennt.
d. Das erste Gehäuseteil (102) ist mit der positiven Elektrode (105) elektrisch verbunden und das zweite Gehäuseteil (101) ist mit der negativen Elektrode (106) elektrisch verbunden.

5. Lithiumbatterie nach einem der Ansprüche 1 bis 3 mit den folgenden zusätzlichen Merkmalen:
a. Das Gehäuse umfasst das metallische Gehäuseteil als erstes Gehäuseteil sowie ein weiteres nichtmetallisches Gehäuseteil als zweites Gehäuseteil.
b. Das metallische Gehäuseteil ist als prismatischer Behälter ausgebildet, das einen polygonalen Boden mit n Seiten sowie n rechteckigen Seitenwänden, die mit dem Boden einen rechten Winkel einschließen, aufweist, wobei n eine ganze Zahl von 4 bis 8 ist.
c. Das zweite Gehäuseteil dient als Deckel für das erste Gehäuseteil und verschließt eine von den n rechteckigen Seitenwänden definierte Öffnung.

6. Lithiumbatterie nach einem der Ansprüche 1 bis 3 mit den folgenden zusätzlichen Merkmalen:
a. Das Gehäuse umfasst das metallische Gehäuseteil als erstes Gehäuseteil sowie ein weiteres metallisches Gehäuseteil als zweites Gehäuseteil.
b. Das metallische Gehäuseteil ist als prismatischer Behälter ausgebildet, das einen polygonalen Boden mit n Seiten sowie n rechteckigen Seitenwänden, die mit dem Boden einen rechten Winkel einschließen, aufweist, wobei n eine ganze Zahl von 4 bis 8 ist.
c. Das zweite Gehäuseteil dient als Deckel für das erste Gehäuseteil und verschließt eine von den n rechteckigen Seitenwänden definierte Öffnung.

7. Lithiumbatterie nach einem der vorhergehenden Ansprüche mit mindestens einem der folgenden zusätzlichen Merkmale:
a. Die erste Lage ist mit einer Schicht aus Lithium beschichtet.
b. Die erste Lage ist mit Lithium dotiert.
c. Das Aluminium in der ersten Lage ist mit Lithium legiert.

8. Verfahren zur Herstellung einer sekundären Lithiumbatterie (100) mit den Merkmalen des Anspruchs 1 mit den folgenden Schritten:
a. Bereitstellung einer Folie oder eines Blechs aus Aluminium oder aus einer Aluminiumlegierung.
b. Aufbringen einer Lage aus Nickel oder aus einer Nickellegierung auf eine Seite der Folie oder des Blechs.
c. Umformen des oder der aus Schritt b. resultierenden Folie oder Blechs mit Hilfe eines Tiefziehwerkzeugs zu einem metallischen Gehäuseteil (102), dessen Innenseite von der Folie oder dem Blech (109) aus dem Aluminium oder aus der Aluminiumlegierung und dessen Außenseite von der Lage (110) aus dem Nickel oder der Nickellegierung gebildet wird.
d. Montage der Lithiumbatterie (100) unter Verwendung des in Schritt c. gebildeten Gehäuseteils (102).

9. Verfahren gemäß Anspruch 8 mit dem folgenden zusätzlichen Schritt:
a. Die Lage (110) aus dem Nickel oder der Nickellegierung wird durch ein CVD- oder ein PVD-Verfahren auf die Folie oder auf das Blech aus dem Aluminium oder der Aluminiumlegierung aufgebracht.

10. Verfahren gemäß Anspruch 8 mit dem folgenden zusätzlichen Schritt:
a. Als Lage (110) aus dem Nickel oder der Nickellegierung wird eine Folie aus Nickel oder aus der Nickellegierung auf die Folie oder auf das Blech aus dem Aluminium oder der Aluminiumlegierung aufgewalzt.

## Claims

1. Secondary lithium battery (100) having the following features:
a. The battery comprises a housing enclosing an interior (111).
b. The battery comprises a composite body (104) arranged in the interior (111) and consisting of at least one positive electrode (105) and at least one negative electrode (106) and at least one separator (112).
c. The housing comprises a metal housing part (102) having an inner side pointing into the interior (111) and an outer side pointing away from the interior (111).
d. The metal housing part (102) consists of
• a first layer (109) consisting of aluminium or of an aluminium alloy that forms the inner side of the metal housing part (102), and
• a second layer (110) consisting of nickel or of a nickel alloy that forms the outer side of the metal housing part (102).

2. Lithium battery according to Claim 1, having the following additional features:
a. The first layer (109) consisting of the aluminium or of the aluminium alloy has a thickness in the range from 10 µm to 1500 µm.
b. The second layer (110) consisting of the nickel or of the nickel alloy has a thickness in the range from 0.1 µm to 100 µm.

3. Lithium battery according to Claim 1 or according to Claim 2, having the following additional features:
a. The composite body (104) comprises the electrodes (105, 106) in stacked form or in wound form.
b. The electrodes (105, 106) are designed to be able to reversibly store and release lithium ions.
c. The electrodes (105, 106) each comprise a current collector that is partly covered with an active material.
d. The positive electrode (105) is electrically connected to the metal housing part (102).

4. Lithium battery according to one of Claims 1 to 3, having the following additional features:
a. The housing comprises the metal housing part (102) as first housing part and a further metal housing part (101) as second housing part.
b. The first and the second housing part (102, 101) are both designed in a cup shape and each have a circular or oval base and an annular side wall.
c. The first and the second housing part (102, 101) are electrically isolated from one another by an annular seal (103) having electrically insulating properties.
d. The first housing part (102) is electrically connected to the positive electrode (105) and the second housing part (101) is electrically connected to the negative electrode (106).

5. Lithium battery according to one of Claims 1 to 3, having the following additional features:
a. The housing comprises the metal housing part as first housing part and a further non-metal housing part as second housing part.
b. The metal housing part is designed as a prismatic container that has a polygonal base with n sides and n rectangular side walls that enclose a right angle with the base, wherein n is an integer from 4 to 8.
c. The second housing part serves as cover for the first housing part and closes off an opening defined by the n rectangular side walls.

6. Lithium battery according to one of Claims 1 to 3, having the following additional features:
a. The housing comprises the metal housing part as first housing part and a further metal housing part as second housing part.
b. The metal housing part is designed as a prismatic container that has a polygonal base with n sides and n rectangular side walls that enclose a right angle with the base, wherein n is an integer from 4 to 8.
c. The second housing part serves as cover for the first housing part and closes off an opening defined by the n rectangular side walls.

7. Lithium battery according to one of the preceding claims, having at least one of the following additional features:
a. The first layer is coated with a layer consisting of lithium.
b. The first layer is lithium-doped.
c. The aluminium in the first layer is alloyed with lithium.

8. Method for manufacturing a secondary lithium battery (100) having the features of Claim 1, having the following steps:
a. Providing a foil or a metal sheet consisting of aluminium or of an aluminium alloy.
b. Applying a layer consisting of nickel or of a nickel alloy to one side of the foil or of the metal sheet.
c. Shaping the foil or metal sheet resulting from step b. using a deep-drawing tool to form a metal housing part (102) the inner side of which is formed by the foil or the metal sheet (109) consisting of the aluminium or of the aluminium alloy and the outer side of which is formed by the layer (110) consisting of the nickel or of the nickel alloy.
d. Assembling the lithium battery (100) using the housing part (102) formed in step c.

9. Method according to Claim 8, having the following additional step:
a. The layer (110) consisting of the nickel or of the nickel alloy is applied to the foil or to the metal sheet consisting of the aluminium or of the aluminium alloy through a CVD or a PVD method.

10. Method according to Claim 8, having the following additional step:
a. A foil consisting of nickel or of the nickel alloy is roll-coated onto the foil or onto the metal sheet consisting of the aluminium or of the aluminium alloy to form the layer (110) consisting of the nickel or of the nickel alloy.

## Revendications

1. Batterie au lithium secondaire (100) présentant les particularités suivantes :
a) La batterie comprend un boîtier enfermant un espace intérieur (111).
b) La batterie comprend un corps composite (104) disposé dans l'espace intérieur (111), composé d'au moins une électrode positive (105) et d'au moins une électrode négative (106) et d'au moins un séparateur (112) .
c) Le boîtier comprend une partie de boîtier métallique (102) pourvue d'une face intérieure tournée vers l'espace intérieur (111) et d'une face extérieure détournée de l'espace intérieur (111).
d) La partie de boîtier métallique (102) est composée
• d'une première couche (109) en aluminium ou en alliage d'aluminium, qui forme la face intérieure de la partie de boîtier métallique (102), et
• d'une deuxième couche (110) en nickel ou en alliage de nickel, qui forme la face extérieure de la partie de boîtier métallique (102) .

2. Batterie au lithium selon la revendication 1, présentant les particularités supplémentaires suivantes :
a) La première couche (109) en aluminium ou en alliage d'aluminium présente une épaisseur dans la plage de 10 µm à 1500 µm.
b) La deuxième couche (110) en nickel ou en alliage de nickel présente une épaisseur dans la plage de 0,1 µm à 100 µm.

3. Batterie au lithium selon la revendication 1 ou selon la revendication 2, présentant les particularités supplémentaires suivantes :
a) Le corps composite (104) comprend les électrodes (105, 106) sous forme empilée ou sous forme enroulée.
b) Les électrodes (105, 106) sont réalisées pour pouvoir charger et décharger des ions de lithium de manière réversible.
c) Les électrodes (105, 106) comprennent respectivement un collecteur de courant qui est couvert partiellement d'un matériau actif.
d) L'électrode positive (105) est reliée électriquement à la partie de boîtier métallique (102).

4. Batterie au lithium selon l'une quelconque des revendications 1 à 3, présentant les particularités supplémentaires suivantes :
a) Le boîtier comprend la partie de boîtier métallique (102) comme première partie de boîtier, ainsi qu'une partie de boîtier métallique supplémentaire (101) comme deuxième partie de boîtier.
b) La première et la deuxième partie de boîtier (102, 101) sont toutes les deux réalisées en forme de godet et présentent respectivement un fond circulaire ou ovale et une paroi latérale annulaire.
c) La première et la deuxième partie de boîtier (102, 101) sont isolées électriquement l'une par rapport à l'autre par un joint d'étanchéité annulaire (103) ayant des propriétés électriquement isolantes.
d) La première partie de boîtier (102) est reliée électriquement à l'électrode positive (105), et la deuxième partie de boîtier (101) est reliée électriquement à l'électrode négative (106).

5. Batterie au lithium selon l'une quelconque des revendications 1 à 3, présentant les particularités supplémentaires suivantes :
a) Le boîtier comprend la partie de boîtier métallique comme première partie de boîtier ainsi qu'une partie de boîtier non métallique supplémentaire comme deuxième partie de boîtier.
b) La partie de boîtier métallique est réalisée comme un conteneur en forme de prisme qui présente un fond polygonal à n faces et n parois latérales rectangulaires qui forment un angle droit avec le fond, où n est un nombre entier entre 4 et 8.
c) La deuxième partie de boîtier sert de couvercle à la première partie de boîtier et ferme une ouverture définie par les n parois latérales rectangulaires.

6. Batterie au lithium selon l'une quelconque des revendications 1 à 3, présentant les particularités supplémentaires suivantes :
a) Le boîtier comprend la partie de boîtier métallique comme première partie de boîtier ainsi qu'une partie de boîtier métallique supplémentaire comme deuxième partie de boîtier.
b) La partie de boîtier métallique est réalisée comme un conteneur en forme de prisme qui présente un fond polygonal à n faces et n parois latérales rectangulaires qui forment un angle droit avec le fond, où n est un nombre entier entre 4 et 8.
c) La deuxième partie de boîtier sert de couvercle à la première partie de boîtier et ferme une ouverture définie par les n parois latérales rectangulaires.

7. Batterie au lithium selon l'une quelconque des revendications précédentes, présentant au moins l'une des particularités supplémentaires suivantes :
a) La première couche est recouverte d'une couche de lithium.
b) La première couche est dopée au lithium.
c) L'aluminium dans la première couche est allié avec du lithium.

8. Procédé de fabrication d'une batterie au lithium secondaire (100) présentant les particularités de la revendication 1, comprenant les étapes suivantes consistant à :
a) Fournir un film ou une tôle en aluminium ou en alliage d'aluminium.
b) Appliquer une couche en nickel ou en alliage de nickel sur une face du film ou de la tôle.
c) Façonner le film ou la tôle résultant de l'étape b) à l'aide d'un outillage d'emboutissage profond en une partie de boîtier métallique (102) dont la face intérieure est formée par le film ou la tôle (109) en aluminium ou en alliage d'aluminium et dont la face extérieure de la couche (110) est formée par le nickel ou l'alliage de nickel.
d) Assembler la batterie au lithium (100) en utilisant la partie de boîtier (102) formée à l'étape c) .

9. Procédé selon la revendication 8, présentant l'étape supplémentaire suivante :
a) La couche (110) en nickel ou en alliage de nickel est appliquée par un procédé CVD ou PVD sur le film ou sur la tôle en aluminium ou en alliage d'aluminium.

10. Procédé selon la revendication 8, présentant l'étape supplémentaire suivante :
a) Comme couche (110) en nickel ou en alliage de nickel, un film en nickel ou en alliage de nickel est laminé sur le film ou sur la tôle en aluminium ou en alliage d'aluminium.
